# EUROPÄISCHE PATENTSCHRIFT

(11) **EP 3 709 122 B1**
(45) Veröffentlichungstag und Bekanntmachung des Hinweises auf die Patenterteilung: **21.12.2022**
(21) Anmeldenummer: 20161748.7
(22) Anmeldetag: 09.03.2020
(51) Int. Cl.: G05D 23/19, F24F 11/00, F24F 11/54, F24F 11/56, F24F 11/58, F24F 11/64, F24F 11/72, F24F 11/80, F24F 11/84, F24F 110/10, F24F 110/20, F24F 110/50

(54) **VORRICHTUNG ZUR TEMPERATURREGELUNG VON RÄUMEN IN EINEM GEBÄUDE UND VERFAHREN ZUR TEMPERATURREGELUNG**
APPARATUS FOR TEMPERATURE CONTROL OF ROOMS IN A BUILDING AND ASSOCIATED TEMPERATURE CONTROL METHOD
DISPOSITIF DE RÉGULATION DE TEMPÉRATURE DES PIÈCES D'UN BÂTIMENT ET PROCÉDÉ DE RÉGULATION ASSOCIÉ

(30) Priorität: 11.03.2019 DE 102019106091
(43) Veröffentlichungstag der Anmeldung: 16.09.2020
(73) Patentinhaber: TTO Thermotechnik d.o.o., 51218 Drazice (HR)
(72) Erfinder: Drljevic, Radisav, 81375 München (DE)
(74) Vertreter: Rings, Rolf

(56) Entgegenhaltungen:
- WO-A1-2015/011446
- WO-A1-2017/062695
- US-A1- 2015 276 238

## Beschreibung

Die vorliegende Erfindung betrifft eine Temperaturregelungsvorrichtung für eine Heiz- oder Kühleinrichtung von einzelnen Räumen in Gebäuden sowie ein Verfahren zur Regelung der Temperatur in solchen Gebäuderäumen mit verschiedenen Heiz- und/oder Kühleinrichtungen. Die Erfindung bezieht sich insbesondere auf eine zentralisierte Regelung von Heizungs- und Kühlsystemen von Gebäuden, bei welcher eine individuelle Anpassung an einzelne Räume des Gebäudes ermöglicht wird. Die Raumtemperaturregelung soll erfindungsgemäß auf die jeweiligen Räume speziell angepasst werden können, insbesondere was die verschiedenen Heizungsvorrichtungen wie Fußbodenheizungen, Heizkörper, Flächenheizungen oder Kühlaggregate wie Klimaanlagen betrifft.

Zu diesem Zweck wurde im Stand der Technik herkömmlicherweise in jedem Raum oder in entsprechenden Referenzräumen ein sogenannter Raumthermostat an einer Wand installiert. Der Raumthermostat wird gemäß dem Stand der Technik dazu verwendet, die einzelnen Heizungs- und Kühleinrichtungen des Raums zentral für den Raum individuell zu regeln. Hierfür werden beispielsweise Stellantriebe für Thermostatventile an Heizungskörpern mit dem Raumthermostat über eine sogenannte Regelklemmleiste angesteuert, so dass die am Raumthermostat eingestellte Temperatur in dem Raum möglichst erreicht wird. Die Raumthermostate dienen auch zum erstmaligen Einstellen der jeweiligen Stellorgane der Heizungs- und Kühleinrichtungen auf die jeweiligen vorhandenen Gegebenheiten.

Im späteren laufenden Betrieb werden derartige Raumthermostate häufig kaum mehr zur Beeinflussung der Temperatur verwendet, lediglich falls eine voreingestellte Soll-Temperatur eines Raums verändert wird, werden die Raumthermostate bedient. Ein Nachteil derartiger konventioneller Raumthermostate für Gebäude- und Raumheizungen ist, dass die jeweiligen Positionen der Stellorgane und des Raumthermostats an vordefinierten festen Positionen einzurichten und zu verbinden sind. Der Raumthermostat muss auch in einer bestimmten festgelegten Verdrahtung eingerichtet werden, damit die einzelnen Stellantriebe der Heiz- und Kühleinrichtungen korrekt zur Regelung verwendet werden können. Ferner hat ein solcher Raumthermostat den Nachteil, dass eine spätere Abänderung der Verhältnisse beispielsweise durch zusätzliche Heizeinrichtungen oder Änderung von Kühlaggregaten schwierig zu realisieren ist. Der Raumthermostat muss dann jeweils wieder aufwendig neu konfiguriert und verdrahtet werden, damit die tatsächlichen Verhältnisse des Raums von dem Gebäude auch richtig abgebildet werden und die korrekte Regelung somit durchgeführt werden kann. Ferner haben derartige konventionelle Raumthermostate den Nachteil, dass sie nicht ohne weiteres die Einbindung von verschiedenartigen Typen von Sensoren und Stellgliedern ermöglichen. Auch lassen sich mit solchen konventionellen Raumthermostaten eine Kommunikation und eine Datenübertragung aus der Ferne schlecht realisieren. Nicht zuletzt haben derartige Raumthermostate den Nachteil, dass sie keine die Energieeffizienz steigernden Maßnahmen realisieren lassen. Die einmal eingestellte Raumtemperatur wird von dem Thermostat in den jeweiligen Räumen über entsprechende Ansteuerung der Stellantriebe, wie zum Beispiel der Antriebe der Thermostatventile an den Heizkörpern, beibehalten, wobei dies auch bei Einbeziehung eines Ist-Zustands aufgrund der Trägheit des Systems häufig nicht möglich ist.

Nicht zuletzt ist eine gezielte Beeinflussung unterschiedlicher Komponenten einer Heizeinrichtung oder Kühleinrichtung mit solchen konventionellen Raumthermostaten nicht möglich.

Aus WO 2015/011446 A1 ist eine Steuerungs-/Regelungseinrichtung für Gebäude bekannt, mit welcher eine Heiz-, Kühl- Oder Lüftungsvorrichtung Oder ähnliches zentral für mehrere Teile des Gebäudes gesteuert werden kann. Dabei werden über ein Eingangs-Interface und ein Ausgangs-Interface verschiedene Werte von Sensoren und Steuerungsparameter für die Vorrichtungen verwendet, urn anhand einer Mehrzahl von neuronalen Netzwerken, welche jeweils spezifisch fUr den Anwendungsfall ausgewählt werden, einen Oder mehrere Steuerparameter zum Steuern der Vorrichtungen (Heizung, Kühlung, Lüftung, Beleuchtung ...) anzusteuern. Die neuronalen Netzwerke werden dazu verwendet, um speziell für den Anwendungsfall am besten geeignete Parameter zum Steuern auszuwählen, wobei die Mehrzahl von verschiedenen Räumen Oder Raumbereichen eines Gebäudes entsprechend bei gleichen Kriterien mit einem ähnlichen Steuerungsalgorithmus mit den neuronalen Netzwerken angesteuert wird. Eine Datenbank ist vorgesehen, um historische Parameter und Steuerungswerte mit einzubeziehen, wobei die vergangenheitsbezogenen Werte der Steuerung und der Parameter der Sensoren eine verbesserte Auswahl von neuronalen Netzwerken, welche passend sind, ermöglichen.

Das Dokument WO 2017/062695 A1 beschreibt eine Temperaturregelung durch eine kabellose Fernbedienung durch einen Nutzer Oder durch eine Ansteuerungsvorrichtung für ein Luftheizungs-Oder -kühlungssystem. Dabei werden ein Thermostat in einem speziellen Ort eines Raums des Gebäudes und ein Sensor zum Erfassen von Daten aus dem Raum installiert.

Vor diesem Hintergrund ist es die Aufgabe der vorliegenden Erfindung, eine Temperaturregelungsvorrichtung für Heiz- oder Kühleinrichtungen von Räumen in Gebäuden sowie ein Verfahren zur Temperaturregelung derartiger Gebäuderäume vorzuschlagen, welche eine individuelle raumbezogene Anpassung der Steuerung und Regelung ermöglicht und bei welcher verschiedene Steuerungsmodi ohne aufwändige Anpassung der Regelungskomponenten ermöglicht werden. Ferner soll mit der Erfindung die energieeffiziente Steuerung und Regelung sowohl in dem Raum selbst als auch durch eine Fernsteuerung gewährleistet werden.

Diese Aufgabe wird mit einer Temperaturregelungsvorrichtung mit den Merkmalen des Anspruchs 1 sowie mit einem Verfahren zur Regelung der Temperatur von Gebäuderäumen gemäß den Schritten des Anspruchs 11 gelöst. Vorteilhafte Ausgestaltungen und Weiterbildungen der Erfindung sind Gegenstand der abhängigen Ansprüche.

Erfindungsgemäß wird eine Temperaturregelungsvorrichtung für eine Heiz- oder Kühlvorrichtung von einzelnen Räumen in Gebäuden mit elektronisch oder elektrisch ansteuerbaren Stellantrieben von Heizeinrichtungen oder Kühleinrichtungen vorgesehen, welche über einen Raumtemperaturregler geregelt sind, um eine voreingestellte oder einstellbare Soll-Temperatur des Raums nach Art eines Raumthermostats zu erhalten, wobei in dem Raumtemperaturregler eine erfasste Ist-Temperatur des Raums verarbeitet und mit der jeweiligen Soll-Temperatur des Raums verglichen wird und wobei die Stellantriebe direkt oder indirekt mit dem Raumtemperaturregler regelungstechnisch verbunden sind, wobei die Vorrichtung dadurch gekennzeichnet ist, dass der Raumtemperaturregler eine Kombination von mindestens einem Temperatursensor in dem Raum und einem in einer davon separaten Steuereinheit gespeicherten Regelungsprogramm ist, wobei das Regelungsprogramm ausgebildet ist, um die Raumverhältnisse des Raums, die Stellantriebe und/oder die Verbindungen zu den Stellantrieben des jeweiligen Raums abzubilden und bei der Temperaturregelung zusammen mit der durch den Temperatursensor erfassten Temperatur und/oder weiterer erfasster Parameter wie der Feuchtigkeit zu berücksichtigen.

Statt eines herkömmlichen Raumthermostats werden somit in dem Raum des Gebäudes jeweils nur ein oder mehrere Temperatursensoren vorgesehen, die mit einem davon getrennt ausgebildeten Teil des Raumtemperaturreglers, nämlich der Steuereinheit, in welcher das Regelungsprogramm gespeichert ist, gekoppelt ist. Der Raumtemperaturregler ist also eine Kombination eines in dem Raum vorgesehenen Temperatursensors und einer Steuereinheit, die getrennt von dem Temperatursensor in einem separaten Teil vorhanden ist, wobei die Steuereinheit spezifisch auf eine Erfassung und Regelung der Temperatur in dem speziellen Raum angepasst ist. Zu diesem Zweck ist die Steuereinheit mit einem speziell programmierten Algorithmus versehen, nämlich dem Regelungsprogramm, welches in der Steuereinheit gespeichert ist. Das Regelungsprogramm bildet insbesondere die Raumverhältnisse und die jeweiligen Stellantriebe der Heiz- und Kühleinrichtungen sowie die Verbindungen zu den Stellantrieben oder weitere Parameter des jeweiligen Raums ab. Im Zusammenhang mit der in dem Raum direkt erfassten Temperatur lässt sich so eine sehr effektive Regelung der Temperatur auch ohne Raumthermostat erreichen. Die zentrale Zusammenfassung der Regelungsprogramme und Regelalgorithmen in der Steuereinheit außerhalb des Raums ermöglicht es, die Einstellung und Anpassung einer derartigen Temperaturregelungsvorrichtung deutlich zu vereinfachen. Die Steuereinheit wird beispielsweise über einen Einlernvorgang oder über ein Einlesen von vorab gespeicherten Raumdaten mit den jeweiligen Gegebenheiten des zu beheizenden oder zu kühlenden Raums versehen. Die Steuereinheit muss dann nach einer Einlernphase beispielsweise nur noch die entsprechende Ist-Temperatur in dem Raum über den Temperatursensor ermitteln, um eine wirksame und sichere Regelung der Soll-Temperatur in dem Raum jeweils zu erzielen. Die Stellantriebe der Heiz- und Kühleinrichtungen sind ebenfalls mit dem Raumtemperaturregler bzw. der Steuereinheit so verbunden, dass sie von außerhalb des Raums elektronisch angesteuert werden können. Erfindungsgemäß lässt sich so auch eine größere Variabilität und Anpassungsfähigkeit des Systems erzielen. Unterschiedliche Arten von Stellantrieben können unterschiedslos an dem Raumtemperaturregler angeschlossen werden. Eine aufwändige neue Verkabelung oder gar ein Austausch eines Raumthermostats, wie es bisher dafür erforderlich war, ist nicht mehr notwendig.

Nicht zuletzt lässt sich mit der erfindungsgemäßen Vorrichtung auch eine gezielte Ansteuerung von einzelnen Stellantrieben durchführen. Die Steuereinheit mit dem Regelungsprogramm und den Verbindungsanschlüssen zu den Stellantrieben kann gezielt so beeinflusst werden, dass einzelne Stellantriebe bei Bedarf speziell verstellt oder ausgestellt werden können. Auch lässt sich mit der erfindungsgemäßen Temperaturregelungsvorrichtung eine fortlaufende Optimierung und Energieeffizienzsteigerung erzielen. Die Parameter zur Raumtemperaturregelung und das Regelungsprogramm lassen sich aufgrund von möglichen Rückkopplungen und erfassten Sensorwerten, wie zum Beispiel von dem Temperatursensor, einem Außenlufttemperatursensor, Feuchtigkeitssensoren oder weiteren Typen von Sensoren, regelmäßig und permanent auch im laufenden Betrieb anpassen. Zu diesem Zweck ist lediglich eine Anpassung des Regelprogramms und eine automatische oder manuelle Eingabe an der Steuereinheit des Raumtemperaturreglers erforderlich, um die jeweiligen Änderungen in der Vorrichtung entsprechend einzutragen. Die erfindungsgemäße Vorrichtung ist damit sehr flexibel und erlaubt es, eine größere Vielzahl von auch unterschiedlichen Stellantrieben von Heiz- und Kühlkomponenten auf effiziente Weise zu steuern und zu regeln.

Gemäß einer vorteilhaften Ausgestaltung der Erfindung ist die Steuereinheit des Raumtemperaturreglers außerhalb des jeweiligen Raums in einer zentralen Steuereinrichtung des Gebäudes oder einer Wohnung angeordnet. Der Raumtemperaturregler gemäß der Erfindung setzt sich somit aus einem in dem Raum direkt angeordneten Temperatursensor und einem außerhalb von dem Raum vorhandenen Steuermodul zusammen, wobei die Steuereinheit in einer zentralen Steuereinrichtung eines Gebäudes montiert ist. Als zentrale Steuereinrichtung des Gebäudes kann beispielsweise ein Schaltschrank für die Heiz- oder Kühlvorrichtungen des gesamten Gebäudes vorgesehen werden. Der in dem Raum vorhandene Temperatursensor ist über eine kabelgebundene oder kabellose Kommunikationsleitung mit der Steuereinheit des Raumtemperaturreglers direkt verbunden, so dass die Regelung der Temperatur und die Steuerung der Stellantriebe von Seiten der Steuereinheit des Raumtemperaturreglers gezielt in dem Raum erfolgen können. Auf diese Weise ist eine flexiblere Art der Anordnung der Teile der Regelungsvorrichtung als bisher möglich. In dem Raum selbst ist kein einstellbarer Raumthermostat mehr erforderlich. Die Regelung und Steuerung erfolgt beispielsweise auf rein softwarebezogener Basis in der Steuereinheit des Raumtemperaturreglers außerhalb von dem Raum. Die erfasste Temperatur in dem Raum und die Einstellung des Regelungsprogramms auf die jeweiligen Raumverhältnisse erfolgt vorab, beispielsweise in einer eine gewisse Zeit dauernden Einlern- oder Anpassungsphase.

Gemäß einer vorteilhaften Ausgestaltung der Erfindung ist die Steuereinheit des Raumtemperaturreglers in einem zentralen Verteilerschrank in Form einer Regelklemmleiste angeordnet. Die Steuereinheit, welche das Regelungsprogramm in Form eines speziell angepassten Algorithmus enthält, ist in dem zentralen Verteilerschrank in Form einer dort einfach einzubauenden Regelklemmleiste realisiert. Eine solche kompakte Regelklemmleiste dient der Umsetzung von elektronischen Steuer- und Regelungsbefehlen in Signale, welche direkt an die Stellantriebe der verschiedenen Heizeinrichtungen oder Kühleinrichtungen der Heiz- oder Kühleinrichtung des Gebäudes übermittelt werden können. Die Steuereinheit in Form einer Regelklemmleiste vereinfacht die Montage und die Anpassung der Temperaturregelungsvorrichtung an die jeweiligen örtlichen Gegebenheiten. Die Regelklemmleiste hat zu diesem Zweck mehrere Eingangsanschlüsse für verschiedene Sensoren, insbesondere den in dem Raum vorhandenen Raumtemperatursensor, sowie mehrere Ausgänge für die jeweiligen zugeordneten Stellantriebe der Heiz- und Kühleinrichtungen. Die Stellantriebe der Heizeinrichtung können beispielsweise elektronisch betriebene Stellantriebe für Thermostatventile von Heizkörpern oder ähnliches sein.

Gemäß einer weiteren vorteilhaften Ausgestaltung der Erfindung ist der Temperatursensor in dem Raum in einer Unterputzdose oder in einem Blindlichtschalter angeordnet. Für die Installation der erfindungsgemäßen Temperaturregelungsvorrichtung sind daher keine zusätzlichen extra Gehäuse oder Bauteile erforderlich. Der Temperatursensor kann direkt in vorhandene Unterputzdosen oder Blindlichtschalter eingesetzt werden und über vorhandene Verkabelungen mit der separat angeordneten Steuereinheit des Raumtemperaturreglers verbunden werden. Die Anordnung in solch einer Unterputzdose oder einem Blindlichtschalter hat ferner den Vorteil, dass keine störenden vorragenden Bauteile der Vorrichtung in dem Raum vorhanden sind. Mit einem minimalen Bauaufwand und ohne Eingriff in die vorhandene Baustruktur kann so die erfindungsgemäße Vorrichtung zur Temperaturregelung in dem jeweiligen Raum vorteilhaft installiert werden.

Nach einer weiteren vorteilhaften Ausgestaltung der Erfindung ist die Steuereinheit des Raumtemperaturreglers mit den Stellantrieben sowie mit dem oder den Sensoren über eine Ein-Draht-Bustechnologie mit Master-Slave-Hierarchie und dedizierten virtuellen Seriennummern der Komponenten verbunden. Die Ein-Draht-Bustechnologie hat erfindungsgemäß den Vorteil, dass eine viel einfachere Verdrahtung der einzelnen Komponenten der Temperaturregelungsvorrichtung möglich wird. Mit lediglich zwei Drähten bzw. einem Hauptdraht ist auf Grundlage dieser Bustechnologie die gezielte Ansteuerung der Stellantriebe ebenso wie das Erfassen von Sensorwerten über die Temperatursensoren und andere Sensoren in dem Raum möglich. Durch diese Ein-Draht-Bustechnologie kann das gesamte System mit Kabeln mit lediglich drei Leitern versehen werden, die in derartigen Gebäuden ohnehin standardmäßig verlegt sind. Das Ein-Draht-Bussystem verwendet dabei jeweils virtuell zugeordnete einmalige Seriennummern der einzelnen Bauteile, wobei eine Master-Slave-Hierarchie verwendet wird. In dem erfindungsgemäßen Fall der Temperaturregelungsvorrichtung ist die Steuereinheit des Raumtemperaturreglers der Master und sind die Sensoren bzw. Stellantriebe die jeweiligen Slave-Komponenten. Durch den einmalig programmierten Identifizierungscode jedes Bauteils wird erreicht, dass unabhängig von den Anschlussstellen an der Steuereinheit die jeweiligen Komponenten und Bauteile sicher mit der Steuerung des Raumtemperaturreglers zusammenwirken. Dies hat ferner den Vorteil, dass beispielsweise auch während des laufenden Betriebs Komponenten ausgetauscht und ersetzt werden können. Außerdem kann eine Einrichtung des Systems viel einfacher als bisher erfolgen, da der Raumthermostat nicht mehr an die jeweiligen Raumgegebenheiten und Komponenten der Regelungsvorrichtung kompliziert regelungstechnisch und in der Verdrahtung durch einen Elektriker angepasst werden muss. Nicht zuletzt ermöglicht diese Technologie auch das Ansteuern von einzelnen Stellantrieben und Sensoren, so dass auch Rückkopplungen oder eine individuelle Anpassung zur Optimierung oder Effizienzsteigerung hierdurch erreicht werden.

Gemäß einer weiteren vorteilhaften Ausgestaltung der Erfindung umfasst die Steuereinheit ein Lernmodul zur Anpassung und Einstellung des Raumtemperaturreglers auf den jeweiligen Raum und die Betriebsverhältnisse. Das Lernmodul kann beispielsweise in einer Anlernphase vor einer Inbetriebnahme der Vorrichtung verwendet werden, um die Steuereinheit und den Raumtemperaturregler auf die jeweiligen Gegebenheiten hin optimal einzustellen. Das Lernmodul kann ferner dazu verwendet werden, um während des laufenden Betriebs weitere Optimierungen und Anpassungen des Systems vorzunehmen. Dies kann insbesondere dann von Vorteil sein, wenn sich die einzelnen Komponenten der Heiz- oder Kühleinrichtungen ändern oder wenn zusätzliche Komponenten an den Raumtemperaturregler anzuschließen sind.

Gemäß einer weiteren vorteilhaften Ausgestaltung der Erfindung umfasst der Raumtemperaturregler mehrere parallele Eingänge für verschiedene Sensoren. Als verschiedenartige Sensoren können insbesondere Temperatursensoren, Feuchtigkeitssensoren, Gassensoren, Ultraschallsensoren oder Strömungssensoren verwendet werden, welche verschiedene Parameter hinsichtlich des jeweiligen Raums des Gebäudes oder seiner thermischen Komponenten erfassen. Diese Sensoren werden über die parallelen Eingänge mit dem Raumtemperaturregler bzw. der Steuereinheit des Raumtemperaturreglers zentral verbunden, wobei sie allesamt auf Basis einer Ein-Draht-Bustechnologie funktionieren. Auf diese Weise lassen sich verschiedene Funktionalitäten auch im Nachhinein einfach in der erfindungsgemäßen Vorrichtung umsetzen und realisieren.

Gemäß einer weiteren vorteilhaften Ausgestaltung der Erfindung weist die Steuereinheit des Raumtemperaturreglers ein Kommunikations-Interface bzw. -schnittstelle auf zur Eingabe von Steuerungsbefehlen und zur Ausgabe von Informationen zur Raumregelung. Die Kommunikationsschnittstelle kann beispielsweise eine Anzeige für aktuelle Parameter in dem Raum umfassen. Ferner kann über die Kommunikationsschnittstelle eine Eingabe von Änderungsparametern erfolgen, beispielsweise wenn die Temperatur zu einem bestimmten Zeitpunkt oder in einem bestimmten Zeitraum speziell geändert werden soll. Das Kommunikations-Interface kann insbesondere auch über eine drahtlose Kommunikation funktionieren, beispielsweise über Funk, Internet oder auch über eine analoge direkte Anzeige mit Bedienelementen an einem Verteilerkasten oder ähnlichem.

Gemäß einer weiteren vorteilhaften Ausgestaltung der Erfindung weist die Steuereinheit des Raumtemperaturreglers einen Speicher zur Speicherung eines Basis-Regel-Algorithmus des jeweiligen Raums des Gebäudes auf. Dieser Basis-Regel-Algorithmus kann beispielsweise nach einer vordefinierten Lernphase abgespeichert werden oder kann auf Grundlage von Kennwerten des Raums aus der Vergangenheit gebildet sein. Auf dieser Grundlage können auch schon vorhandene Daten und Temperaturwerte zum Beispiel aus älteren Systemen in die Regelung und Steuerung der erfindungsgemäßen Temperaturregelungsvorrichtung mit eingebunden werden. Die Speicherung eines Basis-Regel-Algorithmus hat ferner den Vorteil, dass auch im Falle eines Ausfalls des Systems immer wieder auf eine Grundeinstellung zurückgegangen werden kann, ohne dass hierfür ein Techniker erforderlich ist. Die erneute Anpassung und Optimierung an den laufenden Betrieb kann dann anschließend wieder automatisch durch die Vorrichtung erfolgen.

Gemäß einer weiteren vorteilhaften Ausgestaltung der Erfindung sind in der Temperaturregelungsvorrichtung ein Außentemperatursensor sowie ein Wetterprognosemodul vorgesehen. Mit dieser Maßnahme kann die Temperaturregelungsvorrichtung schon frühzeitig auf sich ändernde Wetterbedingungen eingestellt werden. Mit der Verarbeitung und Berücksichtigung von Daten einer Wettervorhersage sowie der tatsächlichen aktuellen Außentemperatur, welche durch den Außentemperatursensor erfasst wird, kann selbst durch die Temperaturregelungsvorrichtung eine Änderung der Regelung vorgenommen werden, so dass der Trägheit von beispielsweise Flächenheizungs- und -kühlungssystemen zuvorgekommen werden kann. Mit solch einer Maßnahme lässt sich frühzeitig der geeignete Zeitpunkt festlegen, ab weichem zusätzlich geheizt oder gekühlt werden muss, um eine eingestellte Raumtemperatur möglichst konstant zu halten.

Gemäß einer weiteren vorteilhaften Ausgestaltung der Erfindung ist als eine Heizeinrichtung des Raums eine Flächenheizung vorgesehen, und die Flächenheizung weist mindestens einen Oberflächentemperatursensor an einer Oberfläche der Flächenheizung auf. Der Oberflächentemperatursensor kann zusätzlich oder alternativ zu dem Raumtemperatursensor vorgesehen werden, um eine noch genauere Regelung und Steuerung der Heizungseinrichtungen für den Raum zu ermöglichen.

Gemäß einer weiteren vorteilhaften Ausgestaltung der Erfindung ist die Steuereinheit der Temperaturregelungsvorrichtung mit einem Computernetzwerk, insbesondere mit dem Internet oder mit einem Intranet, für ein Gebäudemanagement des Gebäudes, in welchem sich der Raum befindet, verbunden. Auf diese Weise kann auch eine Fernwartung und Fernsteuerung realisiert werden. Die tatsächlichen aktuellen Werte des Raumes, insbesondere die Raumtemperatur, lassen sich so auch über das Internet von außerhalb des Gebäudes auslesen und entsprechende Eingriffe in die Steuerung und Regelung der Stellantriebe über das Internet oder über ein Intranet realisieren. Die Möglichkeiten einer Überwachung und Steuerung sind dadurch vergrößert.

Die Erfindung betrifft ebenso ein Verfahren zur Temperaturregelung für eine Heiz- oder Kühleinrichtung von einzelnen Räumen in Gebäuden, wie es in dem nachfolgend wiedergegebenen Anspruch 11 definiert ist:
Verfahren zur Temperaturregelung für eine Heiz- oder Kühleinrichtung von einzelnen Räumen in Gebäuden mit elektronisch ansteuerbaren Stellantrieben von Heizeinrichtungen oder Kühleinrichtungen, welche über einen Raumtemperaturregler geregelt werden, um eine voreingestellte oder einstellbare Soll-Temperatur des Raumes zu erhalten, wobei der Raumtemperaturregler eine erfasste Ist-Temperatur des Raumes verarbeitet und mit der jeweiligen Soll-Temperatur des Raumes vergleicht und wobei die Stellantriebe direkt oder indirekt mit dem Raumtemperaturregler regelungstechnisch verbunden sind und angesteuert werden, gekennzeichnet durch
- Einsetzen eines Raumtemperaturreglers in Form einer Kombination von mindestens einem Temperatursensor in dem Raum und einem in einer davon separaten Steuereinheit gespeicherten Regelungsprogramm;
- Einrichten und Anpassen des Regelungsprogramms, um die Raumverhältnisse des Raumes, die Stellantriebe und die Verbindungen zu den Stellantrieben des jeweiligen Raumes abzubilden;
- Regeln der Temperatur des Raumes auf Basis des Regelungsprogramms zusammen mit der durch den Temperatursensor erfassten Temperatur.

Mit dem erfindungsgemäßen Verfahren ist es nicht mehr erforderlich, in dem Raum selbst Raumtemperaturbediengeräte oder Steuergeräte vorzusehen, wie zum Beispiel herkömmliche Raumthermostate. Anstatt einer Steuerung und Regelung über den im Raum sich befindenden Raumthermostat weist das erfindungsgemäße Verfahren eine Kombination von einem Raumtemperaturregler mit einer Steuereinheit auf, in welcher das Regelungsprogramm gespeichert und abgelegt ist. Die Steuereinheit ist mit einem Temperatursensor in dem Raum selbst gekoppelt, jedoch separat von diesem beispielsweise außerhalb des Raums angeordnet. Vorzugsweise ist die Steuereinheit ausgebildet, um ein Regelungsprogramm auszuführen, welches auf die Raumverhältnisse des Raums, die Stellantriebe und/oder die Verbindungen zu den Stellantrieben des jeweiligen Raums hin speziell angepasst und eingestellt ist, wobei das Regelungsprogramm zur Steuerung der Stellantriebe der Heiz- oder Kühleinrichtung in dem Raum, beispielsweise in Form von ansteuerbaren Stellantrieben für Thermostatventile der Heizkörper oder ähnlichem, angepasst ist. Das erfindungsgemäße Verfahren ist dadurch gekennzeichnet, dass die Temperatur des Raums auf Basis des in der Steuereinheit getrennt von dem Raum angeordneten Regelungsprogramms zusammen mit der durch den Temperatursensor im Raum erfassten Raumtemperatur geregelt wird. Das erfindungsgemäße Verfahren ist leicht an unterschiedliche Raumverhältnisse und Betriebssituationen anpassbar. Eine aufwändige Verkabelung und Einstellung an einem im Raum sich befindenden Raumthermostat ist nicht mehr erforderlich. Die benötigten Grunddaten hinsichtlich der Raumverhältnisse sind in dem Regelungsprogramm in der Steuereinheit vorab abgelegt. Auch ist das Verfahren gemäß der Erfindung flexibler in der Anpassung und Änderung von angeschlossenen Sensoren oder Stellantrieben für die Heizungseinrichtungen oder Kühleinrichtungen.

Gemäß einer vorteilhaften Ausgestaltung des Verfahrens wird ein Lernprogrammmodul zum Einrichten und zur Anpassung des Raumtemperaturreglers sowie zur Optimierung des Betriebs der Heiz- oder Kühleinrichtung des Raums verwendet. Mit solch einem Lernprogramm kann beispielsweise bei einer erstmaligen Installation in einem Anfangsstadium von 24 Stunden die Einstellung und Anpassung des Regelungsprogramms auf den jeweiligen Raum hin erfolgen. Anschließend kann das Lernprogramm zur fortlaufenden Optimierung und Verbesserung der Effizienz der Regelung verwendet werden. Insbesondere lässt sich so auch auf Änderungen in der Nutzung und der eingesetzten technischen Komponenten sowie der Umgebungstemperatur leicht reagieren. Auch kann mit dem Lernprogrammmodul die stete Verbesserung des Regelungsalgorithmus vorteilhaft umgesetzt werden, so dass insgesamt eine bessere Energieeffizienz gewährleistet ist.

Nach einem vorteilhaften Aspekt der Erfindung wird eine Wettervorhersage bei der Regelung verwendet und berücksichtigt. Hiermit lassen sich frühzeitig nötige Änderungen der Steuerung der Stellantriebe einleiten, um eine Trägheit der thermischen Komponenten zu kompensieren.

Gemäß einer weiteren vorteilhaften Ausgestaltung des erfindungsgemäßen Verfahrens wird eine Ein-Draht-Bustechnologie zum Steuern der Stellantriebe und zum Kommunizieren mit den Sensoren und der Steuereinheit in Form einer Regelklemmleiste verwendet. Die Ein-Draht-Bustechnologie hat den Vorteil, dass mit einer geringen Anzahl von elektrischen Kabeln eine Vielzahl von unterschiedlichen technischen Komponenten wie Stellantrieben oder Sensoren integriert werden kann. Die Variabilität der Regelung mit solch einem Verfahren ist dadurch vergrößert. Mit nur einer geringen Anzahl von Leitungen können die einzelnen Komponenten sicher angesteuert und in das Regelungsprogramm eingebunden werden. Die Steuereinheit mit der Regelklemmleiste weist dennoch eine genaue und dedizierte Zuordnung zu den einzelnen Bauteilen wie Stellantrieben und Sensoren auf. Mit einer Art virtueller Seriennummer wird über die sogenannte 1-Wire Bus Technology eine Einstellung und Zuordnung der Regelklemmleiste auf die jeweiligen Komponenten und Raumverhältnisse ausgeführt. Dies hat den Vorteil, dass ohnehin vorhandene Leitungen verwendet werden können und nicht wie bisher bei herkömmlichen Raumthermostaten aufwändige Verdrahtungen und Einstellungen der Raumthermostate erforderlich sind. Auch lässt sich so ein leichter Ersatz von den eingesetzten Bauteilen der Heizungs- und Kühleinrichtung erreichen, ohne dass die Regelklemmleiste in der Steuereinheit selbst ausgetauscht werden muss.

Gemäß einer weiteren vorteilhaften Ausgestaltung des erfindungsgemäßen Verfahrens wird ein softwaregestütztes Einstellen und/oder Überwachen der Raumtemperatur mittels des Raumtemperaturreglers durchgeführt. Das softwaregestützte Einstellen hat den Vorteil, dass die manuellen Einstellungen und Messungen vor Ort reduziert sind. Das Verfahren kann weitestgehend automatisch und selbsttätig die notwendigen Einstellungen bei der Erstinstallation sowie die Überwachung der Raumtemperatur im laufenden Betrieb ausführen.

Gemäß einer weiteren vorteilhaften Ausgestaltung der Erfindung werden weitere Raumwerte in dem zu regelnden Raum des Gebäudes erfasst, wie zum Beispiel Feuchtigkeitswerte, Rauchwerte oder Strömungswerte, die mittels an der Steuereinheit angeschlossener Sensoren erfasst werden. Die Berücksichtigung von weiteren derartigen Sensorwerten ermöglicht eine noch bessere Anpassung der Regelung an die gewünschten Soll-Parameter. Die Raumtemperaturregelung ist somit weiter optimiert und lässt sich noch besser auf die jeweiligen vorhandenen Gegebenheiten einstellen. Auch lassen sich so zusätzliche Funktionalitäten wie Sicherheitsüberwachungen mit in das System integrieren.

Weitere Vorteile, Merkmale und Aspekte der vorliegenden Erfindung werden im Folgenden mehr im Detail anhand von einigen Ausführungsbeispielen der Erfindung im Zusammenhang mit den beigefügten Zeichnungen erläutert werden. In den Zeichnungen zeigen:
- Fig. 1: ein schematisches Blockschaltbild des Aufbaus eines Ausführungsbeispiels einer erfindungsgemäßen Raumtemperaturregelungsvorrichtung;
- Fig. 2: ein schematisches Blockschaltbild des Aufbaus eines weiteren Ausführungsbeispiels einer erfindungsgemäßen Raumtemperaturregelungsvorrichtung; und
- Fig. 3: eine Detailansicht eines Ausführungsbeispiels einer erfindungsgemäßen Steuereinheit in Form einer Regelklemmleiste, welche mit einem (nicht dargestellten) Temperatursensor im Raum verbunden ist.

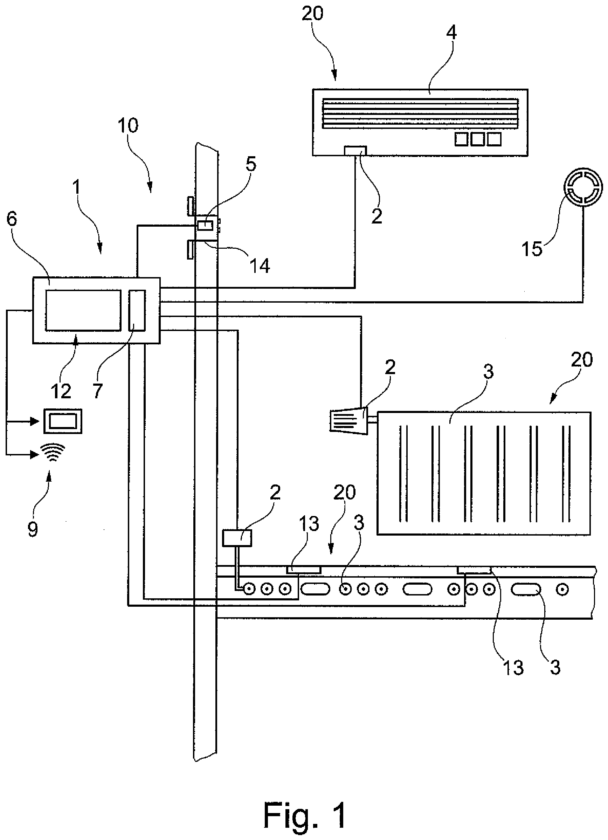

In der Fig. 1 ist in einer schematischen Blockdarstellung ein erstes Ausführungsbeispiel einer erfindungsgemäßen Temperaturregelungsvorrichtung 10 für eine Heiz- und Kühleinrichtung 20 eines Raums eines Gebäudes gezeigt. Die Temperaturregeiungsvorrichtung 10 dient einer Regelung der Raumtemperatur auf eine voreingestellte Soll-Temperatur oder eine sich verändernde gewünschte Raumtemperatur. Die Temperaturregelungsvorrichtung 10 ist zum Ansteuern von elektronisch ansteuerbaren Stellantrieben 2 von verschiedenen Heizeinrichtungen 3 und Kühleinrichtungen 4 ausgebildet. Die Temperaturregelungsvorrichtung 10 bei diesem Ausführungsbeispiel besteht aus einem Raumtemperaturregler 1, welcher in Form einer Kombination von mindestens einem in dem Raum im Inneren angeordneten Temperatursensor 5 und einer Steuereinheit 6 gebildet ist. In der Steuereinheit 6 ist erfindungsgemäß ein Regelungsprogramm hinterlegt und abgespeichert, welches auf die Raumverhältnisse des jeweiligen individuellen Raums hin angepasst ist und insbesondere auf die Stellantriebe (Typen, Arten, Anzahl etc.) und die Verbindungen zu den Stellantrieben des jeweiligen Raums hin speziell angepasst wurde. Außerdem ist das Regelungsprogramm in der Steuereinheit 6, welches beispielsweise in einem Speicher 7 hinterlegt ist, auf die Betriebsbedingungen für die Heiz- und Kühleinrichtung 20 hin angepasst, d. h. dass die Grunddaten des Raums und der thermischen Komponenten in dem gespeicherten Regelungsprogramm in der Steuereinheit 6 abgespeichert und abgebildet sind. Anstatt eines herkömmlichen Raumthermostats mit einem Temperatureinstellregler und einem Thermostaterfassungselement ist erfindungsgemäß somit in dem Raum selbst nur mindestens ein Raumtemperatursensor 5 angeordnet. Dieser Raumtemperatursensor 5 ist gemäß einer vorteilhaften Ausgestaltung der Erfindung in einem Blindschalter oder einer Unterputzdose 14 in einer Wand des Raums eingebaut, so dass er im Wesentlichen unsichtbar und unzugänglich in dem Raum montiert ist. Der Raumtemperatursensor 5 ist mit einer Leitung mit der Steuereinheit 6 des Raumtemperaturreglers 1 gekoppelt, der sich getrennt von dem Raumtemperatursensor 5, beispielsweise außerhalb von dem Raum in einem Verteilerschrank oder ähnlichem, befindet. Der Raumtemperaturregler 6 weist eine speziell ausgebildete und in der Hardware sowie in der Software angepasste Steuereinheit 6 auf, die mit einem Speicher 7 versehen ist. Bei dem in der Fig. 1 gezeigten ersten Ausführungsbeispiel ist die Steuereinheit 6 in Form einer sogenannten Regelklemmleiste 12 ausgebildet, in welcher ein Regelprogramm abgelegt ist, das speziell auf die Raumverhältnisse des zu regelnden Raums und die dort vorhandenen Stellantriebe 2 sowie deren Verbindungen hin angepasst wurde. Beispielsweise wurde das Regelungsprogramm auf Basis eines Lernalgorithmus durch ein Lernmodul auf die jeweiligen Betriebsverhältnisse und Raumverhältnisse hin angepasst und dann in dem Speicher 7 entsprechend abgelegt. Für die Regelung der Temperatur wird erfindungsgemäß durch den Raumtemperaturregler 1 nun das Regelprogramm ausgeführt und auf Basis der in dem Raum erfassten Temperaturen durch den Temperatursensor 5 die konstante oder gewünschte Temperatur in dem Raum geregelt, indem verschiedene Stellantriebe 2 der Heiz- und Kühleinrichtung 20 angesteuert werden.

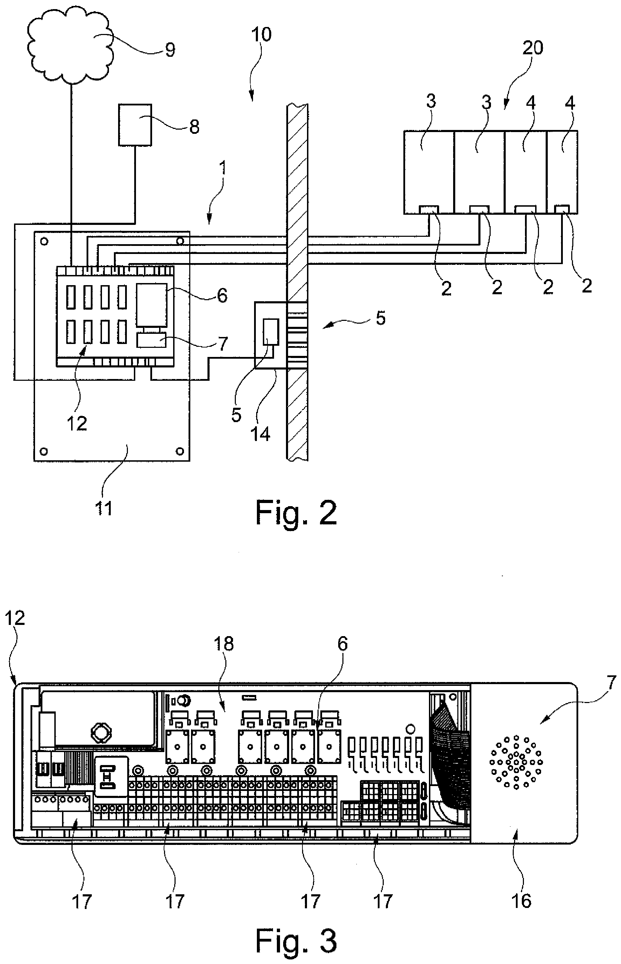

Dies ist schematisch in der Fig. 1 für das erste Ausführungsbeispiel mit einer Reihe von beispielhaften Stellantrieben 2 veranschaulicht: Bei diesem beispielhaften Raum ist als Heiz- und Kühleinrichtung 20 eine im Deckenbereich montierte Kühleinrichtung 4 in Form einer Raumklimaanlage vorhanden, die mit Bedienelementen sowie einem elektrisch ansteuerbaren Stellantrieb 2 versehen ist. Der Stellantrieb 2 der jeweiligen Heizeinrichtungen 3 und Kühleinrichtungen 4 kann sowohl ein thermostatisch wirkender Stellantrieb sein, beispielsweise in Form eines Heizungsthermostats, als auch ein Stellantrieb, der andere Größen, wie eine Strömungsmenge von einem Kühlfluid oder ähnlichem, auf die gewünschte Stärke hin regelt. Andere Arten von Stellantrieben 2 sind ebenso mit der erfindungsgemäßen Temperaturregelungsvorrichtung 10 ansteuerbar. Als in dem Raum ansteuerbare Heizeinrichtungen 3 sind bei diesem exemplarischen Beispiel der Fig. 3 sowohl an den Wänden montierte konventionelle Heizkörper mit elektronischen Stellantrieben 2 der Thermostatventile vorgesehen als auch eine Flächenheizung in Form einer Fußbodenheizung 3, welche flächendeckend in dem Fußboden des Raums verlegt ist. Auch die Fußbodenheizung 3 ist über einen entsprechenden Stellantrieb mit dem erfindungsgemäßen Raumtemperaturregler 1 ansteuerbar. Die Fußbodenheizung 3 ist bei diesem Beispiel noch ergänzend mit Oberflächentemperatursensoren 13 ausgestattet, welche direkt die Temperatur an der Heizfläche (Fußboden) der Fußbodenheizung 3 erfassen und in die Steuereinheit 6 des Raumtemperaturreglers 1 außerhalb des Raums weiterleiten. Mit den so ansteuerbaren Stellantrieben 2 der Heiz- und Kühleinrichtungen 20 kann erfindungsgemäß eine Regelung der gewünschten Raumtemperatur nach Art eines konventionellen Raumthermostats erfolgen, ohne dass die sonst erforderlichen festen Zuordnungen und Verdrahtungen von festgelegten Elementen erforderlich sind, wie es bei herkömmlichen derartigen Raumthermostaten der Fall war. Eine Ansteuerung und Regelung der Vorrichtung 10 erfolgt dabei nicht mehr über ein Regelelement an einem Raumthermostat in dem Raum selbst, sondern über beispielsweise eine Kommunikationsschnittstelle 9 des Raumtemperaturreglers 1. Über diese Schnittstelle 9 können beispielsweise über das Internet, über Funk, über eine Display-Vorrichtung, über eine zentrale Gebäudeverwaltungssoftware in einem Computernetzwerk oder ähnliches die tatsächlichen Raumverhältnisse der Sensorwerte der Sensoren 5, 13, 15 erfasst und angezeigt werden und kann auf die Raumtemperatur Einfluss genommen werden. Ferner kann nach vorteilhafter Ausgestaltung der erfindungsgemäßen Vorrichtung 10 auch speziell eine Ansteuerung von einzelnen Stellantrieben 2 einzelner Heizeinrichtungen 3 oder Kühleinrichtungen 4 vorgenommen werden. Dies ist sowohl von der Ferne über beispielsweise eine Handy-App als auch direkt an der Steuereinheit 6 des Raumtemperaturreglers 1 möglich. Die Variabilität und Bedienmöglichkeiten sind somit deutlich erhöht.

Ein wesentlicher Vorteil der Erfindung liegt nun darin, dass aufgrund der Kombination der Steuereinheit 6 mit dem Regelprogramm und einem in dem Raum angeordneten Raumtemperatursensor 5 eine festgelegte Zuordnung zu den Stellantrieben 2 nicht mehr erforderlich ist. Die einzelnen Verhältnisse und Typen und Arten von Stellantrieben in dem Raum werden jeweils beispielsweise durch eine Einlernphase dem Regelungsprogramm zugewiesen und in dem Speicher 7 der Steuereinheit 6 abgespeichert. Die Regelung ist damit wesentlich flexibler. Es kann auf verschiedene Bedarfssituationen ebenso wie auf einen Austausch oder eine Änderung von Komponenten der Heiz- oder Kühleinrichtungen 3, 4 jeweils direkt an der Steuereinheit 6 eingegangen werden. Dafür ist die Steuereinheit 6 mit einer speziellen Hardware und einer speziellen Software in Form des Regelungsprogramms versehen, welches eine solche Raumtemperaturregelung nach Art eines konventionellen Raumthermostats mit den beschriebenen vereinfachten Komponenten ermöglicht. Bei dem in der Fig. 1 gezeigten Ausführungsbeispiel ist als ein Beispiel für einen zusätzlichen Sensor noch ein Gassensor 15 in Form eines Rauchmelders dargestellt, der ebenfalls mit einer Leitung oder Verbindung mit dem Raumtemperaturregler 1 bzw. der Steuereinheit 6 gekoppelt ist. Mit der Einbindung weiterer Sensoren wie Gassensoren, Außentemperatursensoren, Strömungssensoren für Luftströmungen oder dergleichen lassen sich so weitere Funktionalitäten mit ein und derselben Temperaturregelungsvorrichtung 10 gemäß der Erfindung realisieren, ohne zusätzliche aufwändige Komponenten und Baumaßnahmen zu erfordern.

Gemäß der Erfindung ist die Verbindung zwischen den Stellantrieben 2, den Sensoren 5, 13 und 15 und der Steuereinheit 6 über eine spezielle Ein-Draht-Bustechnologie mit einer Master-Slave-Hierarchie und dedizierten virtuellen Seriennummern der einzelnen Komponenten verwirklicht. Die Ein-Draht-Bustechnologie ermöglicht es, mit nur wenigen Drahtleitern eine effektive Zuordnung, Authentifizierung und Kommunikation zwischen den Komponenten herzustellen. Über virtuelle Seriennummern wird jedem Bauteil und jeder Komponente der Vorrichtung 10 eine Art virtuelle eindeutige Seriennummer zugewiesen, die in dem Speicher 7 der Steuereinheit 6 hinterlegt ist. Die Steuereinheit 6 ist beispielsweise als eine Art Regelklemmleiste 12 realisiert, in welcher verschiedene Steckverbindungen auf der Platine vorhanden sind, über welche Veränderungen in der Zuordnung und dem Anschluss der Stellantriebe 2 und Sensoren 5, 13 und 15 vorgenommen werden können.

Die Fig. 2 der Zeichnungen zeigt in einer schematischen Übersichtsdarstellung ein zweites Ausführungsbeispiel einer erfindungsgemäßen Temperaturregelungsvorrichtung 10 für eine Heiz- und/oder Kühleinrichtung 20 in einem Raum eines Gebäudes. Auch bei diesem zweiten Ausführungsbeispiel sind in dem Raum des Gebäudes verschiedene Heizeinrichtungen 3 und Kühleinrichtungen 4 vorgesehen, welche jeweils über elektronisch ansteuerbare Stellantriebe 2 angesteuert werden können. Zur Regelung der Temperatur des Raums auf eine festgelegte oder gewünschte Soll-Temperatur ist erfindungsgemäß ein Raumtemperaturregler 1 vorgesehen, welcher nach Art eines Raumthermostats die eingestellte oder gewünschte Raumtemperatur als Soll-Temperatur mit einem Abgleich einer vorhandenen Ist-Temperatur regelt. Zu diesem Zweck werden durch den Raumtemperaturregler 1 verschiedene Stellantriebe 2 der Heizeinrichtungen 3 und Kühleinrichtungen 4 angesteuert. Die Temperaturregelungsvorrichtung 10 gemäß der Erfindung weist auch bei diesem Ausführungsbeispiel eine Kombination von im Wesentlichen einem in dem Raum angeordneten Temperatursensor 5 oder mehreren Temperatursensoren 5 sowie eine Steuereinheit 6 auf, welche getrennt von dem Sensor 5 vorzugsweise außerhalb von dem Raum montiert ist. Die Steuereinheit 6 des Raumtemperaturreglers 1 ist beispielsweise in einem Verteilerschrank 11 einer zentralen Steuerungsstelle des Gebäudes montiert. Die Steuereinheit 6 ist mit dem Temperatursensor 5 in dem Raum verbunden, so dass eine Ansteuerung der verschiedenen Stellantriebe 2 auf Basis der erfassten Ist-Temperatur zum Erreichen der gewünschten Soll-Temperatur in dem Raum bewirkt werden kann. Der Raumtemperaturregler 1 ist also mit einer speziell ausgebildeten Steuereinheit 6 versehen, in welcher ein Regelungsprogramm abgelegt und gespeichert ist, beispielsweise in einem Speicher 7. Das Regelungsprogramm ist so auf den Raum, der in der Temperatur zu regeln ist, abgestimmt, dass die verschiedenartigen Typen und Verbindungen der Stellantriebe 2 der Heiz- und Kühleinrichtungen 20 sowie die vorhandenen Raumverhältnisse in dem Programm abgebildet sind. Das Regelungsprogramm in der Steuereinheit 6 ist somit jeweils auf den speziellen Raum hin angepasst und eingestellt, ganz im Sinne einer voreingestellten Anordnung und Verkabelung von konventionellen Raumthermostaten, die eine Festlegung der einzelnen Verbindungen jeweils bei der Verkabelung berücksichtigen.

Erfindungsgemäß wird dies nun nicht über einen in dem Raum montierten Raumthermostat gewährleistet, sondern über eine Kombination von in dem Raum angeordneten Temperatursensor 5 und Steuereinheit 6, die vorzugsweise getrennt davon außerhalb von dem Raum montiert ist. Damit entfallen aufwändige Anpassungen und Einstellungen des Raumthermostats. Der Raumtemperaturregler 1 wird mit speziell angepasster Hardware und Software in der Steuereinheit 6 und dem Speicher 7 verwirklicht. Damit lassen sich nicht nur unterschiedliche Arten und Typen von Heizeinrichtungen 3 und Kühleinrichtungen 4 jeweils ohne größeren Aufwand einbinden. Auch sind Änderungen am System ohne weiteres nachträglich möglich. Ferner lassen sich weitere Daten in der Steuereinheit 6 verarbeiten, beispielsweise die Außentemperatur von einem Außentemperatursensor 8. Nicht zuletzt ermöglicht diese Form einer speziell auf einen Raum angepassten Raumtemperaturregelung auch die Einbindung in ein Computernetzwerk, beispielsweise über das Internet 9 oder über ein Intranet, in welchem das Gebäudemanagement realisiert ist. Der Temperatursensor 5 ist bei diesem Ausführungsbeispiel in einer Aussparung in einer Wand des Raums des Gebäudes in einer Unterputzdose 14 untergebracht. Alternativ kann der Temperatursensor 5 auch in einem Blindschalter oder anderen derartigen in dem Raum ohnehin vorhandenen technischen Dosen installiert werden. Der Temperatursensor 5 in dem Raum erfordert keine in dem Raum vorhandenen Einstellelemente. Die Einstellung erfolgt beispielsweise über ein Bedienfeld an der Steuereinheit 6 in dem Verteilerkasten 11, über eine Software in einem Computernetzwerk 9 oder über eine App, die über das Internet mit der Steuereinheit 6 verbunden ist. Auf diese Weise kann eine sehr einfache Einstellung und Überwachung der Raumtemperatur sowie weiterer raumbezogener Parameter durch den Raumtemperaturregler 1 erfolgen.

Die softwaregestützte Einstellung und Anpassung der Steuereinheit 6, um das Regelungsprogramm in dem Speicher 7 abzuspeichern, kann beispielsweise durch ein Lernmodul mit einer Lernsoftware durchgeführt werden, die über eine festgelegte Einstellungsdauer von beispielsweise 24 Stunden eine individuelle Anpassung an die Gegebenheiten des Raums in dem Gebäude und die verschiedenen Stellantriebe 2 durchführt. Das Verbinden mit der Steuereinheit 6 mit den einzelnen Sensoren 5, 8 und den Stellantrieben 2 erfolgt auch bei diesem Ausführungsbeispiel über die sogenannte Ein-Draht-Bustechnologie (engl.: *1-Wire Bus System*). Dadurch ist keine aufwändige zusätzliche Verdrahtung in dem Gebäude erforderlich. Einfache Kabel mit zwei oder drei Litzen reichen aus, um die erfindungsgemäße Temperaturregelungsvorrichtung 10 in dem Gebäude für einen Raum oder mehrere Räume zu installieren. Eine Anpassung der Steuereinheit 6 an eine unterschiedliche Anzahl von Stellantrieben 2 ist ebenso leicht möglich, indem die verschiedenen Steckanschlüsse jeweils anders belegt werden und in dem Regelungsprogramm entsprechend berücksichtigt werden.

Die Steuereinheit 6 kann auch bei diesem Ausführungsbeispiel als eine sogenannte Regelklemmleiste 12 realisiert sein. Auf einer zentralen Platine 18 sind die Anschlüsse 17 für die Sensoren 5, 8 sowie die Stellantriebe 2 zusammen mit der erforderlichen Recheneinheit, beispielsweise in Form einer CPU 16, und dem Speicher 7 vorgesehen.

Ein Beispiel für eine solche Regelklemmleiste 12 für die Realisierung der Steuereinheit 6 des Raumtemperaturreglers 1 gemäß der Erfindung ist in der Fig. 3 in einer Vorderansicht mit abgenommenem Deckelelement gezeigt. Die Steuereinheit 6 weist verschiedene Kabelanschlüsse 17 für die Eingänge und Ausgänge der Stellantriebe 2 und der Sensoren 5, 13, 15 auf. Ferner ist eine zentrale Platine 18 in der Regelklemmleiste 12 vorgesehen, an welcher die einzelnen Komponenten jeweils angebracht sind. Erfindungsgemäß ist in der Steuereinheit 6 das Regelungsprogramm, welches speziell auf den Raum hin angepasst ist, abgelegt. Die Anzahl, die Art und die Typen von Stellantrieben 2 sind ebenso in dem Regelungsprogramm berücksichtigt wie die Form und die Position der einzelnen Sensoren, insbesondere des mindestens einen zentralen Raumtemperatursensors 5. Auf diese Weise lassen sich auch unterschiedliche Anschlüsse und Änderungen im System bewirken. Die Änderung der Anzahl und der Anordnung der Heizeinrichtungen 3 und der Kühleinrichtungen 4 in dem Raum sowie deren Stellantrieben 2 erfordert nachher auch keine aufwändige Abänderung der Verdrahtung oder der Einstellung. Alles kann zentral an der Steuereinheit 6 realisiert werden, und zwar ohne dass hierfür aufwändige Abänderungen erforderlich sind. Nicht zuletzt erlaubt die erfindungsgemäße Steuereinheit 6 eine weit variablere Regelung der Heiz- und Kühleinrichtungen 20 des Raums, da auch einzelne Stellantriebe 2 speziell bei Bedarf angesteuert werden können. Die Ansteuerung kann dabei sowohl direkt an dem Verteilerschrank 11 (vgl. Fig. 2) als auch über eine Fernverbindung wie das Internet, eine Funkverbindung, eine Handy-App oder ähnliches durchgeführt werden. Die Überwachung, Kontrolle, Steuerung und Regelung des Gebäudes ist damit weitaus effizienter, als es bisher mit herkömmlichen einzelnen Raumthermostaten in jedem Raum möglich war.

## Patentansprüche

1. Temperaturregelungsvorrichtung (10) für eine Heiz- oder Kühleinrichtung (20) von einzelnen Räumen in Gebäuden mit einem Raumtemperaturregler (1) und mit elektronisch ansteuerbaren Stellantrieben (2) von Heizeinrichtungen (3) oder Kühleinrichtungen (4), welche über den Raumtemperaturregler (1) geregelt sind, um eine voreingestellte oder einstellbare Soll-Temperatur des Raumes zu erhalten, wobei in dem Raumtemperaturregler (1) eine erfasste Ist-Temperatur des Raumes verarbeitet und mit der jeweiligen Soll-Temperatur des Raumes verglichen wird und wobei die Stellantriebe (2) direkt mit dem Raumtemperaturregler (1) regelungstechnisch verbunden sind, **dadurch gekennzeichnet, dass** der Raumtemperaturregler (1) eine Kombination von mindestens einem Temperatursensor (5) in dem Raum und einem in einer davon separaten Steuereinheit (6) gespeicherten Regelungs-Programm zur Regelung der Raumtemperatur nach Art eines konventionellen Raumthermostats, jedoch ohne feste Zuordnungen und Verdrahtungen von festgelegten Elementen des jeweiligen Raumes ist, welches ausgebildet ist, um die Raumverhältnisse des jeweiligen Raumes, die Stellantriebe (2) und die Verbindungen zu den Stellantrieben (2) des jeweiligen Raumes abzubilden und bei der Temperaturregelung zusammen mit der durch den Temperatursensor (5) erfassten Temperatur zu berücksichtigen,
dass die Steuereinheit (6) mit dem oder den Stellantrieben (2) und Sensoren (5) über eine Ein-Draht-Bustechnologie mit Master-Slave-Hierarchie und dedizierten virtuellen Seriennummern der Komponenten verbunden ist
und dass die Steuereinheit (6) des Raumtemperaturreglers (1) in einem zentralen Verteilerschrank (11) in Form einer Regelklemmleiste (12) angeordnet ist.

2. Temperaturregelungsvorrichtung (10) nach Anspruch 1, **dadurch gekennzeichnet, dass** die Steuereinheit (6) des Raumtemperaturreglers (1) außerhalb des Raumes in einer zentralen Steuereinrichtung des Gebäudes oder einer Wohnung angeordnet ist.

3. Temperaturregelungsvorrichtung (10) nach einem der vorangegangenen Ansprüche, **dadurch gekennzeichnet, dass** der Temperatursensor (5) in einer Unterputzdose (14) oder einem Blindlichtschalter in dem Raum angeordnet ist.

4. Temperaturregelungsvorrichtung (10) nach einem der vorangegangenen Ansprüche, **dadurch gekennzeichnet, dass** die Steuereinheit (6) ein Lernmodul zur Anpassung und Einstellung des Raumtemperaturreglers (1) auf den jeweiligen Raum und die Betriebsverhältnisse umfasst.

5. Temperaturregeiungsvorrichtung (10) nach einem der vorangegangenen Ansprüche, **dadurch gekennzeichnet, dass** der Raumtemperaturregler (1) mehrere parallele Eingänge für verschiedene Sensoren (5, 13, 15), insbesondere Temperatur-, Feuchtigkeits-, Gas-, Ultraschall- oder Strömungssensoren, umfasst, welche auf Basis einer Ein-Draht-Bustechnologie funktionieren.

6. Temperaturregelungsvorrichtung (10) nach einem der vorangegangenen Ansprüche, **dadurch gekennzeichnet, dass** die Steuereinheit (6) ein Kommunikations-Interface zur Eingabe von Steuerungsbefehlen und zur Ausgabe von Informationen aufweist.

7. Temperaturregelungsvorrichtung (10) nach einem der vorangegangenen Ansprüche, **dadurch gekennzeichnet, dass** die Steuereinheit (6) einen Speicher (7) zur Speicherung eines Basis-Regel-Algorithmus des jeweiligen Raumes des Gebäudes nach einer vordefinierten Lernphase oder auf Grundlage von Kennwerten des Raumes aus der Vergangenheit umfasst.

8. Temperaturregelungsvorrichtung (10) nach einem der vorangegangenen Ansprüche, **dadurch gekennzeichnet, dass** ein Außentemperatursensor (8) sowie ein Wetterprognosemodul vorgesehen sind.

9. Temperaturregelungsvorrichtung (10) nach einem der vorangegangenen Ansprüche, **dadurch gekennzeichnet, dass** die Heizeinrichtung (3) des Raumes eine Flächenheizung ist und dass mindestens ein Oberflächentemperatursensor (13) an einer Oberfläche der Flächenheizung vorgesehen ist.

10. Temperaturregelungsvorrichtung (10) nach einem der vorangegangenen Ansprüche, **dadurch gekennzeichnet, dass** die Steuereinheit (6) mit einem Computernetzwerk (9), insbesondere dem Internet oder einem Intranet, zum Gebäudemanagement verbunden ist.

11. Verfahren zur Temperaturregelung für eine Heiz- oder Kühleinrichtung (20) von einzelnen Räumen in Gebäuden mit elektronisch ansteuerbaren Stellantrieben (2) von Heizeinrichtungen (3) oder Kühleinrichtungen (4), welche über einen Raumtemperaturregler (1) geregelt werden, um eine voreingestellte oder einstellbare Soll-Temperatur des Raumes zu erhalten, wobei der Raumtemperaturregler (1) eine erfasste Ist-Temperatur des Raumes verarbeitet und mit der jeweiligen Soll-Temperatur des Raumes vergleicht und wobei die Stellantriebe (2) direkt mit dem Raumtemperaturregler (1) regelungstechnisch verbunden sind und angesteuert werden, **gekennzeichnet durch**
- Einsetzen eines Raumtemperaturreglers (1) in Form einer Kombination von mindestens einem Temperatursensor (5) in dem Raum und einem in einer davon separaten Steuereinheit (6) gespeicherten Regelungsprogramm;
- Einrichten und Anpassen des Regelungsprogramms, um mindestens die Raumverhältnisse des Raumes, die Stellantriebe (2) und die Verbindungen zu den Stellantrieben (2) des jeweiligen Raumes nach Art eines konventionellen Raumthermostats, jedoch ohne feste Zuordnungen und Verdrahtungen von festgelegten Elementen des jeweiligen Raumes abzubilden;
- Regeln der Temperatur des Raumes auf Basis des Regelungsprogramms zusammen mit der durch den Temperatursensor (5) erfassten Temperatur; und
- eine Ein-Draht-Bustechnologie zum Steuern der Stellantriebe (2) und zum Kommunizieren mit den Sensoren (5) und der Steuereinheit (6) in Form einer Regelklemmleiste.

12. Verfahren nach Anspruch 11, **gekennzeichnet durch** Verwenden eines Lernprogrammmoduls zur Einrichtung und Anpassung des Raumtemperaturreglers (1) auf den Raum sowie zur Optimierung des Betriebs der Heiz- oder Kühleinrichtung (20).

13. Verfahren nach Anspruch 11 oder 12, **gekennzeichnet durch** Verwenden einer Wettervorhersage, um in der Regelung eine Trägheit der Heiz- oder Kühleinrichtung zu kompensieren.

14. Verfahren nach einem der Ansprüche 11 bis 13, **gekennzeichnet durch** softwaregestütztes Einstellen und/oder Überwachen der Raumtemperatur mittels des Raumtemperaturreglers (1).

15. Verfahren nach einem der Ansprüche 11 bis 14, **gekennzeichnet durch** Erfassen von weiteren Raumwerten wie Feuchtigkeit, Rauch oder Gas mittels an die Steuereinheit (6) zusätzlich angeschlossener Sensoren.

## Claims

1. Temperature control device (10) for a heating or cooling appliance (20) in individual rooms in buildings with a room temperature controller (1) and with electronically controllable actuators (2) of heating appliances (3) or cooling appliances (4), which are controlled by means of the room temperature controller (1), in order to obtain a preset or settable desired temperature of the room, wherein a detected actual temperature of the room is processed in the room temperature controller (1) and is compared with the desired temperature of the room in each case and wherein the actuators (2) are directly connected to the room temperature controller (1) in control terms, **characterized in that** the room temperature controller (1) is a combination of at least one temperature sensor (5) in the room and a control program for controlling the room temperature in the manner of a conventional room thermostat stored in a control unit (6) separate therefrom, but without fixed assignments and wiring of fixed elements in the respective room, which program is designed to reproduce the room conditions in the respective room, the actuators (2) and the connections to the actuators (2) in the respective room and in the case of temperature control, to take account along with the temperature detected by the temperature sensor (5),
that the control unit (6) is connected to the actuator or actuators (2) and sensors (5) via one-wire bus technology with master-slave hierarchy and dedicated virtual serial numbers of the components
and that the control unit (6) of the room temperature controller (1) is arranged in a central distributor cabinet (11) in the form of a control terminal strip (12).

2. Temperature control device (10) according to Claim 1, **characterized in that** the control unit (6) of the room temperature controller (1) is arranged outside the room in a central control system of the building or an apartment.

3. Temperature control device (10) according to one of the preceding claims, **characterized in that** the temperature sensor (5) is arranged in the room in an in-wall box (14) or a blind light switch in the room.

4. Temperature control device (10) according to one of the preceding claims, **characterized in that** the control unit (6) comprises a teaching module for adjusting and setting the room temperature controller (1) to the respective room and operating conditions.

5. Temperature control device (10) according to one of the preceding claims, **characterized in that** the room temperature controller (1) comprises multiple parallel inputs for different sensors (5, 13, 15), in particular temperature, moisture, gas, ultrasound or flow sensors, which function on the basis of one-wire bus technology.

6. Temperature control device (10) according to one of the preceding claims, **characterized in that** the control unit (6) comprises a communication interface for the input of control commands and for the output of information.

7. Temperature control device (10) according to one of the preceding claims, **characterized in that** the control unit (6) comprises a memory (7) for storing a basic-rule algorithm of the respective room in the building according to a predefined learning phase or on the basis of characteristic values of the room from the past.

8. Temperature control device (10) according to one of the preceding claims, **characterized in that** an outside temperature sensor (8) and a weather forecasting module are provided.

9. Temperature control device (10) according to one of the preceding claims, **characterized in that** the heating appliance (3) in the room is panel heating and that at least one surface temperature sensor (13) is provided on a surface of the panel heating.

10. Temperature control device (10) according to one of the preceding claims, **characterized in that** the control unit (6) is connected by a computer network (9), in particular the Internet or Intranet, to the building management.

11. Method for temperature control for a heating or cooling appliance (20) in individual rooms in buildings with electronically controllable actuators (2) of heating appliances (3) or cooling appliances (4), which are controlled by means of a room temperature controller (1), in order to obtain a preset or settable desired temperature of the room, wherein the room temperature controller (1) processes a detected actual temperature of the room and compares it with the desired temperature of the room in each case and wherein the actuators (2) are connected straight to the room temperature controller (1) in control terms, **characterized by**
- use of a room temperature controller (1) in the form of a combination of at least one temperature sensor (5) in the room and a control program stored in a control unit (6) separate therefrom;
- set-up and adjustment of the control program, so that at least the room conditions in the room, the actuators (2) and the connections to the actuators (2) of the respective room are reproduced in the manner of a conventional room thermostat, but without fixed assignments and wiring of fixed elements in the respective room;
- control of the temperature of the room based on the control program along with the temperature detected by the temperature sensor (5); and
- one-wire bus technology for controlling the actuators (2) and for communicating with the sensors (5) and the control unit (6) in the form of a control terminal strip.

12. Method according to Claim 11, **characterized by** the use of a teaching programme module for the set-up and adjustment of the room temperature controller (1) to the room and also for optimizing the operation of the heating or cooling appliance (20).

13. Method according to Claim 11 or 12, **characterized by** the use of a weather forecast, in order to compensate for inertia in the heating or cooling appliance in the controls.

14. Method according to one of Claims 11 to 13, **characterized by** software-supported adjustment and/or monitoring of the room temperature by means of the room temperature controller (1).

15. Method according to one of Claims 11 to 14, **characterized by** the detection of further room values, such as moisture, smoke or gas, by means of sensors connected in addition to the control unit (6).

## Revendications

1. Dispositif de régulation de température (10) pour un système de chauffage ou de refroidissement (20) de pièces individuelles dans des bâtiments avec un régulateur de température ambiante (1) et avec des actionneurs (2) à commande électronique de dispositifs de chauffage (3) ou de dispositifs de refroidissement (4), qui sont commandés par l'intermédiaire d'un régulateur de température ambiante (1), afin d'obtenir une température de consigne prédéfinie ou réglable de la pièce, dans lequel une température réelle détectée de la pièce est traitée dans le régulateur de température ambiante (1) et comparée à la température de consigne respective de la pièce, et dans lequel les actionneurs (2) sont directement reliés au régulateur de température ambiante (1) par une technique de régulation, **caractérisé en ce que** le régulateur de température ambiante (1) est une combinaison d'au moins un capteur de température (5) dans la pièce et d'un programme de commande stocké dans une unité de commande (6) séparée de celui-ci pour réguler la température ambiante à la manière d'un thermostat d'ambiance classique, mais sans affectation fixe et sans câblage d'éléments fixes de la pièce respective, qui est conçu pour réguler les conditions ambiantes de la pièce, les actionneurs (2) et les connexions aux actionneurs (2) de la pièce respective et à prendre en compte dans la régulation de la température en même temps que la température détectée par le capteur de température (5), que l'unité de commande (6) est connectée à l'actionneur (2) et au capteur (5) par l'intermédiaire d'une technologie de bus monofilaire avec une hiérarchie maître-esclave et des numéros de série virtuels dédiés des composants
et que l'unité de commande (6) du régulateur de température ambiante (1) est disposée dans une armoire de distribution centrale (11) sous la forme d'un bornier de commande (12).

2. Dispositif de régulation de température (10) selon la revendication 1, **caractérisé en ce que** l'unité de commande (6) du régulateur de température ambiante (1) est disposée à l'extérieur de la pièce dans un dispositif de commande central du bâtiment ou d'un appartement.

3. Dispositif de régulation de température (10) selon l'une des revendications précédentes, **caractérisé en ce que** le capteur de température (5) est disposé dans une boîte d'encastrement (14) ou un interrupteur aveugle dans le local.

4. Dispositif de régulation de température (10) selon l'une des revendications précédentes, **caractérisé en ce que** l'unité de commande (6) comprend un module d'apprentissage pour adapter et régler le régulateur de température ambiante (1) à la pièce concernée et aux conditions de fonctionnement.

5. Dispositif de régulation de température (10) selon l'une des revendications précédentes, **caractérisé en ce que** le régulateur de température ambiante (1) comprend plusieurs entrées parallèles pour différents capteurs (5, 13, 15), en particulier des capteurs de température, d'humidité, de gaz, d'ultrasons ou de flux, qui fonctionnent sur la base d'une technologie de bus monofilaire.

6. Dispositif de régulation de température (10) selon l'une des revendications précédentes, **caractérisé en ce que** l'unité de commande (6) présente une interface de communication pour l'entrée d'instructions de commande et pour la sortie d'informations.

7. Dispositif de régulation de température (10) selon l'une des revendications précédentes, **caractérisé en ce que** l'unité de commande (6) comprend une mémoire (7) pour stocker un algorithme de régulation de base de la pièce respective du bâtiment après une phase d'apprentissage prédéfinie ou sur la base de valeurs caractéristiques de la pièce dans le passé.

8. Dispositif de régulation de température (10) selon l'une des revendications précédentes, **caractérisé en ce qu'**il est prévu un capteur de température extérieure (8) ainsi qu'un module de prévision météorologique.

9. Dispositif de régulation de température (10) selon l'une des revendications précédentes, **caractérisé en ce que** le dispositif de chauffage (3) de la pièce est un chauffage de surface et **en ce qu'**au moins un capteur de température de surface (13) est prévu sur une surface du chauffage de surface.

10. Dispositif de régulation de température (10) selon l'une des revendications précédentes, **caractérisé en ce que** l'unité de commande (6) est reliée à un réseau informatique (9), notamment l'Internet ou un Intranet, pour la gestion du bâtiment.

11. Procédé de régulation de la température pour un dispositif de chauffage ou de refroidissement (20) de pièces individuelles dans des bâtiments avec des actionneurs (2) à commande électronique de dispositifs de chauffage (3) ou de dispositifs de refroidissement (4), qui sont régulés par un régulateur de température ambiante (1), afin d'obtenir une température de consigne préréglée ou réglable de la pièce, le régulateur de température ambiante (1) traitant une température réelle détectée de la pièce et la comparant à la température de consigne respective de la pièce, et les actionneurs (2) étant directement reliés au régulateur de température ambiante (1) par une technique de régulation et étant commandés, **caractérisé par**,
- Mise en place d'un régulateur de température ambiante (1) sous la forme d'une combinaison d'au moins un capteur de température (5) dans la pièce et d'un programme de régulation mémorisé dans une unité de commande (6) séparée de celui-ci ;
- Mise en place et adaptation du programme de régulation afin de représenter au moins les conditions spatiales de la pièce, les actionneurs (2) et les liaisons vers les actionneurs (2) de la pièce respective à la manière d'un thermostat d'ambiance conventionnel, mais sans affectations et câblages fixes d'éléments déterminés de la pièce respective ;
- une régulation de la température de la pièce sur la base du programme de régulation conjointement avec la température détectée par le capteur de température (5) ; et
- une technologie de bus à un fil pour commander les actionneurs (2) et communiquer avec les capteurs (5) et l'unité de commande (6) sous la forme d'un bornier de régulation.

12. Procédé selon la revendication 11, **caractérisé par** l'utilisation d'un module de programme d'apprentissage pour établir et adapter le régulateur de température ambiante (1) à la pièce et pour optimiser le fonctionnement du dispositif de chauffage ou de refroidissement (20).

13. Procédé selon la revendication 11 ou 12, **caractérisé par** l'utilisation d'une prévision météorologique pour compenser dans la régulation une inertie du dispositif de chauffage ou de refroidissement.

14. Procédé selon l'une des revendications 11 à 13, **caractérisé par** le réglage et/ou la surveillance de la température ambiante au moyen du régulateur de température ambiante (1), assisté par un logiciel.

15. Procédé selon l'une des revendications 11 à 14, **caractérisé par** la détection d'autres valeurs d'ambiance telles que l'humidité, la fumée ou le gaz au moyen de capteurs connectés en plus à l'unité de commande (6).
